# EUROPÄISCHE PATENTSCHRIFT

(11) **EP 2 467 754 B1**
(45) Veröffentlichungstag und Bekanntmachung des Hinweises auf die Patenterteilung: **21.09.2016**
(21) Anmeldenummer: 10730765.4
(22) Anmeldetag: 02.07.2010
(51) Int. Cl.: G03B 15/06, F21V 7/18, G09F 15/00

(54) **TRANSPORTABLER LICHTMANIPULATOR**
TRANSPORTABLE LIGHTMANIPULATOR
MANIPULATEUR DE LUMIÈRE TRANSPORTABLE

(30) Priorität: 19.08.2009 DE 202009010894 U
(43) Veröffentlichungstag der Anmeldung: 27.06.2012
(73) Patentinhaber: Geller, Wolfgang-Peter, 21376 Garlstorf (DE)
(72) Erfinder: Geller, Wolfgang-Peter, 21376 Garlstorf (DE)
(74) Vertreter: Raffay & Fleck
(86) Internationale Anmeldenummer: PCT/EP2010/059490
(87) Internationale Veröffentlichungsnummer: WO 2011/020642

(56) Entgegenhaltungen:
- EP-A1- 0 597 199
- DE-A1- 19 950 950
- US-A- 2 545 251
- US-B1- 7 134 758

## Beschreibung

### Technisches Gebiet

Die Erfindung betrifft einen transportablen Lichtmanipulator.

### Stand der Technik

Ein solcher transportabler Lichtmanipulator ist in Form eines Lichtreflektors z.B. in der EP 0 597 199 A1 beschrieben. Dieser dort beschriebene Lichtreflektor findet in der Praxis vielfachen Einsatz und wird dort zum Ausleuchten von Sets für Film- und Fotoaufnahmen verwendet. Er hat den besonderen Vorteil, dass er schnell und einfach in wenige Teile zerlegt werden kann und dann eine leichte und von einer Person bequem zu transportierende Einheit bildet. Ebenso ist er am Einsatzort vergleichsweise schnell aufzubauen, so dass auch hier ein schneller Einsatz gewährleistet ist und nicht etwa wertvolle Aufnahmezeiten verloren gehen.

In der Praxis sind neben der Verwendung als Lichtreflektor gleichartig aufgebaute Lichtmanipulatoren bekannt, bei denen anstelle des Reflektortuches z.B. ein Lichtdiffusortuch eingesetzt wird, um zur Ausleuchtung des Aufnahmesets ein Diffundieren des einfallenden Lichtes zu bewerkstelligen und damit weichere Konturen zu erzielen.

Auch wenn sich die bekannten transportablen Lichtmanipulatoren dem Grunde nach gut bewährt haben, gibt es hier doch noch Verbesserungsbedarf. So ist zum einen beim Aufbau des vorbekannten transportablen Lichtmanipulators der Kraftaufwand zum Befestigen der Querstrebe an den Längsstreben nicht unerheblich, da dabei jedes Mal nahezu die vollständige Spannung zu überwinden ist, die aufgrund des elastischen Manipulatortuches bzw. der elastischen Einrichtungen zum Festlegen an den Längsstreben aufgebracht wird. Je nach Elastizität und insbesondere Alter des Manipulatortuches bzw. der Einrichtung zum Festlegen der Längsstreben kann dieser Kraftaufwand erheblich sein, so dass insbesondere schwächere Personen oder weibliche Assistenten Schwierigkeiten beim Aufbau des transportablen Lichtmanipulators haben und Hilfe bedürfen. Darüber hinaus erfordert die alleinige Aufbringung der Haltekraft auf das Rahmengestell durch die Tuchspannung nicht nur ein besonders präzises Abmessen des Tuches und Anpassung der Dimensionen zur Aufbringung des richtigen Maßes an Spannkraft, auch kann bei einem Altern des Tuches die Spannkraft nachlassen, so dass dann ein ausreichender Halt des Rahmengestells sogar nicht mehr sichergestellt sein kann.

### Kurzbeschreibung der Erfindung

Hier hat es sich der Erfinder zur Aufgabe gemacht, Abhilfe zu schaffen und einen verbesserten transportablen Lichtmanipulator anzugeben, der sowohl im Aufbau einfacher zu bedienen ist als auch eine höhere Toleranz hinsichtlich der Tuchspannung bzw. der Spannung aufgrund der Elastizität der Einrichtung zum Festlegen an den Längsstreben erlaubt und einem Nachlassen dieser Spannungen durch Alterungseffekte entgegenwirkt bzw. auch im Falle eines solchen Alterns noch immer einen ausreichenden und zuverlässigen Halt des Lichtmanipulators in Gebrauchsstellung erreicht.

Diese Aufgabe wird erfindungsgemäß gelöst durch einen transportablen Lichtmanipulator mit den Merkmalen des Schutzanspruchs 1. Vorteilhafte Weiterbildungen eines solchen erfindungsgemäßen transportablen Lichtmanipulators sind in den abhängigen Ansprüchen 2 bis 15 genannt.

Der wesentliche Gedanke und die Basis der Erfindung besteht darin, dass wenigstens eine Strebe anstelle wie im Stand der Technik ein allein passives Strebenelement zu sein, nunmehr aktiv zum Aufbau der Spannung im Manipulatortuch bzw. in dem aufgebauten Lichtmanipulator selbst beiträgt, also als Spannstrebe ausgeführt ist. Hierzu ist die Spannstrebe aus wenigstens zwei in deren Längsrichtung gegeneinander verschiebbaren Verschiebeabschnitten gebildet, die - in Längsrichtung verschiebbar - miteinander verbunden oder verbindbar sind. Dabei ist zwischen den Verschiebeabschnitten eine Federkraft vorgesehen, die diese Abschnitte voneinander weg zwingt, die Spannstrebe also spreizt.

Durch diese Maßnahme kann einerseits beim Aufbau des erfindungsgemäßen transportablen Lichtmanipulators der erforderliche Kraftaufwand erheblich reduziert werden. Denn nun muss beim Verbinden des Rahmengestells mit den an den Festlegeeinrichtungen an dem Manipulatortuch lediglich die Spannstrebe entgegen der Federkraft "gestaucht" werden, was mit weniger Kraftaufwand erfolgen kann, als dies zum Spannen des Tuches bei dem aus dem Stand der Technik gemäß der EP 0 597 199 A1 vorbekannten transportablen Lichtreflektor der Fall war. Darüber hinaus wird durch die Federkraft in der Spannstrebe bei der richtigen Wahl dieser Federkraft und eines Hubweges, um den die Spannstrebe durch die Federkraft "gestreckt" wird, ein zusätzliches straffendes Moment auf das Manipulatortuch aufgebracht, was einerseits einen verbesserten und sichereren Halt des Rahmengestells insgesamt bewirkt und damit höhere Toleranzen in der Spannung des Manipulatortuches bzw. der Festlegeeinrichtung erlaubt, zum anderen einem Nachlassen der Elastizität und Federwirkung des Manipulatortuches bzw. der Festlegeeinrichtung desselben entgegenwirkt, bzw. einen hierdurch hervorgerufenen Effekt eines Nachlassens der Spannung im Manipulatortuch ausgleicht.

Eine mögliche Ausgestaltungsform der in wenigstens zwei Verschiebeabschnitte unterteilten Spannstrebe ergibt sich gemäß Schutzanspruch 2. So kann die Spannstrebe mit aneinander anliegenden Verschiebeabschnitten im Bereich dieser Verschiebeabschnitte rohrförmig gebildet sein und in den Rohröffnungen der Verschiebeabschnitte kann jeweils mit einem Ende ein Innenrohr bzw. ein massiver Innenzylinder eingesetzt sein, der einerseits für die Verbindung sorgt, andererseits die Relativverschiebbarkeit in Längsrichtung bewerkstelligt. Dieses eingesetzte Innenrohr bzw. der Innenzylinder ist an einem ersten der Verschiebeabschnitte fest zu diesem geordnet, an einen zweiten der Verschiebeabschnitte verschiebbar zwangsgeführt in Längsrichtung der Spannstrebe. Diese Zwangsführung erstreckt sich über einen vorgegebenen Hub, welcher letztlich durch die Geometrie des Rahmengestells und die gewünschte zusätzliche Spannwirkung bestimmt wird. Durch ein zwischen einem in dem zweiten Verschiebeabschnitt angeordneten, ortsfesten Anschlag und dem in diesem Verschiebeabschnitt angeordneten Ende des Innenrohres bzw. Innenzylinders angeordnetes Druckfederelement wird die Federkraft zum Auseinanderdrücken der beiden Verschiebeabschnitte aufgebracht. Dieses Druckfederelement kann z.B. eine Schraubenfeder sein.

Die Zwangsführung sollte insbesondere dann, wenn wie gemäß Anspruch 5 und folgenden vorgesehen die Enden der Strebe abgewinkelt verlaufen, drehfest sein und nur eine Längsverschiebung ermöglichen, eine Relativverdrehung hingegen verhindern. Dies kann z.B. erfolgen durch eine konstruktive Lösung wie in Anspruch 4 angegeben. Dort sorgt das Langloch, welches von dem Stift durchragt wird, für eine ausschließliche Relativbewegbarkeit in axialer Richtung, eine Drehbewegung um die Längsachse wird durch den Halt zwischen Langloch und Stift verhindert.

Durch die abgewinkelten Enden der Strebe, wie sie in einer vorteilhaften Weiterbildung vorgesehen sein können, wird das Rahmengestell nicht nur in einer Ebene gebildet, sondern erfährt eine Ausrichtung auch in eine dritte Dimension. Durch diese Erstreckung auch in die dritte Dimension ist das Rahmengestell im aufgebauten Zustand noch haltbar und insbesondere verwindungssteif. Dies ist nicht nur bei Außeneinsätzen, bei denen auf dem transportablen Lichtmanipulator z.B. durch Windeinfluss auch Torsionskräfte wirken können, von Vorteil. Auch bei Innenaufnahmen führt eine so erhöhte Stabilität zu einer deutlichen Verbesserung der Handhabbarkeit. Darüber hinaus kann durch die Abwinkelung eine ungewünschte Ausbeulung des Manipulatortuchs im Bereich von hinter dem Manipulatortuch verlaufenden Streben vermieden werden.

Die in Anspruch 5 angegebenen Winkel bzw. Winkelbereiche haben sich als besonders geeignet herausgestellt.

Vorteilhafterweise ist das Rahmengestell gemäß Anspruch 6 als zerlegbares und/oder zusammenklappbares Rahmengestell ausgebildet. So kann es besonders platzsparend und einfach transportiert werden.

Besonders vorteilhaft ist es in diesem Fall, wenn in Gebrauchsstellung die durch Elastizität des Manipulatortuchs hervorgerufene Kraft auf das das Rahmengestell den Zusammenhalt des Rahmengestells fördert.

Vorteilhafterweise ist das Rahmengestell in einer besonders einfachen Ausführung durch zwei Längsstreben und mindestens eine Querstrebe gebildet. Dabei können die Längsstreben mit den Längsseiten des Manipulatortuchs in Deckung gebracht und mit diesen Verbunden werden. Die mindestens eine Querstange erstreckt sich dann zwischen den Längsstreben. Dabei ist sie vorteilhaft in der Mitte der beiden, parallel verlaufenden Längsstreben befestigt.

Vorteilhafterweise sind dabei die mindestens eine Querstrebe und/oder die Längsstreben als Spannstrebe ausgeführt. Die Wahl, welchen Streben als Spannstrebe ausgeführt werden, kann vom Fachmann je nach Rahmengestellausführung, Form des Manipulatortuchs und gewünschter Manipulatortuchspannung getroffen werden.

Besonders vorteilhaft wird mindestens eine Querstrebe gemäß Anspruch 5 abgewinkelt ausgeführt.

Jedoch sind auch andere Ausführungsformen, beispielsweise mit einem X-förmigen Rahmengestell denkbar.

Eine einfache Art, den transportablen Lichtmanipulator gemäß Anspruch 8 aufzubauen, besteht darin, Verbindungsmittel, insbesondere Aufsteckzapfen an den Längsstreben zum Verbinden mit, insbesondere rohrförmig offenen, Enden des wenigsten einen Querstrebes vorzusehen. Diese Art der Verbindung ist einfach herzustellen und stabil im aufgebautem Zustand. Selbstverständlich können ebenso gut an den Längsstreben Aufnahmehülsen oder Einsteckbuchsen vorgesehen sein, in die die Querstrebe mit ihren Enden einsteckbar sind. Auch mit einer solchen Lösung, die letztlich nichts weiter als eine konstruktive Umkehr der Zapfenlösung ist, wird auf ebenso einfache Weise ein einfacher Aufbau und ein stabiler Halt im zusammengebauten Zustand erreicht.

Im Zusammenwirken mit Querstreben mit abgewinkelten Enden sind zweckmäßiger Weise auch die Aufsteckzapfen bzw. entsprechende Einsteckhülsen so ausgerichtet, dass sie vorgegeben durch den Winkel, um den der Querstrebe an seinen Enden abgewinkelt verläuft, gewinkelt verlaufen.

Eine einfache Ausgestaltung der Einrichtungen zum Festlegen des Manipulatortuches an den Längsstreben besteht darin, hierfür an den Längskanten des Manipulatortuches Längstaschen vorzusehen. Diese Längstaschen können z.B. durch Schlaufen gebildet sein, die entweder in dem Manipulatortuch selbst ausgebildet oder aber mit diesem fest verbunden, z.B. vernäht sind. Dabei können diese Schlaufen selbst auch aus einem textilen Material bestehen, insbesondere einem solchen mit Elastizität. So kann, wenn das Manipulatortuch selbst nicht elastisch gebildet ist, die Elastizität der Schlaufen den Halt des Rahmengestells befördern. Ist das Manipulatortuch selbst elastisch, können entsprechend angeordnete Schlaufen aus nicht elastischem Material oder aber auch aus einem elastischen Material sein, wobei im letztgenannten Fall dadurch die Elastizität der Bespannung (gebildet aus Manipulatortuch und Schlaufen) insgesamt noch einmal erhöht wird.

Der Aufbau des transportablen Lichtmanipulators wird vereinfacht, wenn in den Längstaschen Ausschnitte vorgesehen sind in den Bereichen, in denen an den Längsstreben Querstrebe festgelegt sind. Diese Ausschnitte können sich sowohl auf der Rückseite, als auch auf einer Vorderseite des transportablen Lichtmanipulators erstrecken, um einen freien Zugang zu der Verbindungsstelle zwischen Längsstreben und Querstreben zu gewährleisten und so einen ungehinderten Zusammenbau des Lichtmanipulators zu ermöglichen.

Insbesondere dann, wenn der Lichtmanipulator große Abmessungen aufweist, z.B. eine Breite von mehr als 1,5 m, ist es für eine kompakte Form des transportablen Lichtreflektors im zerlegten Zustand von Vorteil, wenn die Längsstreben und/oder Querstrebe in Längsrichtung teilbar sind. Dann nämlich können diese Elemente beim Zusammenlegen (im auseinander gebauten Zustand des Lichtmanipulators) noch einmal verkürzt werden durch Teilung. So sind die zu transportierenden, starren Längsstreben bzw. Querstrebe (genauer deren Teile) in der Länge begrenzt, so dass sie bequem von einer Person getragen werden können.

Auch wenn insbesondere für solche Lichtmanipulatoren mit kleiner Fläche grundsätzlich ein Querstrebe zum Aufbau des Gerüstrahmens genügt, so können doch zwei oder auch bei größeren Lichtmanipulatoren drei und mehr Querstrebe Verwendung finden. Die Anzahl der Querstrebe ist dabei insbesondere auch nach Kriterien zu wählen, die durch die erforderliche Spannung auf dem Manipulatortuch im gebrauchsfertigen Zustand vorgegeben sind. Sind hier nämlich zu wenig als Spannstreben ausgeführte Querstrebe vorgesehen und wird der Abstand zwischen solchen Querstreben zu groß, so kann es zu einem zu geringen Maß an Spannung in bestimmten Bereichen des Manipulatortuches kommen, wodurch ein Faltenwurf oder ähnliche Instabilitäten auftreten können, die das gewünschte, mit dem Lichtmanipulator zu erzeugende Ausleuchtungsergebnis stören.

Der erfindungsgemäße transportable Lichtmanipulator kann insbesondere als Lichtreflektor ausgebildet werden, wozu das Manipulatortuch ein Reflektortuch ist mit z.B. einer reflektierenden Beschichtung, er kann ebenso gut ein Lichtdiffusor sein mit einem Diffusortuch als Manipulatortuch mit Lichtabschwächungswerten in einem gewünschten Bereich. Insbesondere ist es dabei auch möglich, einen transportablen Lichtmanipulator bereitzustellen mit wählbaren Eigenschaften, indem für einen Gerüstrahmen unterschiedliche Manipulatortücher beigegeben werden, beispielsweise ein Reflektortuch und ein oder mehrere Diffursortücher, z.B. mit unterschiedlichen Lichttransmissionswerten.

### Kurze Beschreibung der Zeichnungsfiguren

Weitere Merkmale und Vorteile der Erfindung ergeben sich aus der nachfolgenden Beschreibung eines Ausführungsbeispiels anhand der beigefügten Figuren. Dabei zeigen:
Fig. 1 eine Ansicht einer Ausführungsform eines erfindungsgemäßen Lichtmanipulators in Gebrauchslage von hinten, d.h. von der Rückseite der Manipulatorfläche her;
Fig. 2 eine Einzelheit des linken oberen Teils des Rahmengestells in vergrößertem Maßstab;
Fig. 3 eine der Fig. 2 entsprechende Ansicht, jedoch der rechten oberen Ecke des Rahmensgestells;
Fig. 4 eine Ansicht auf eine Querstrebe mit abgebogenen Ende;
Fig. 5 eine Ansicht des linken Teils der als Spannstrebe ausgeführten Querstrebes der Fig. 4 in vergrößertem Maßstab und mit der Darstellung der federgespannten Längenverstellmöglichkeit;
Fig. 6 eine Einzelheit des linken oberen Teils des Rahmengestells mit federgespannter Längenverstellmöglichkeit; und
Fig. 7 eine Einzelheit des mittleren oberen Teils des Rahmengestells mit federgespannter Längenverstellmöglichkeit.

### Beschreibung der Ausführungsarten

16

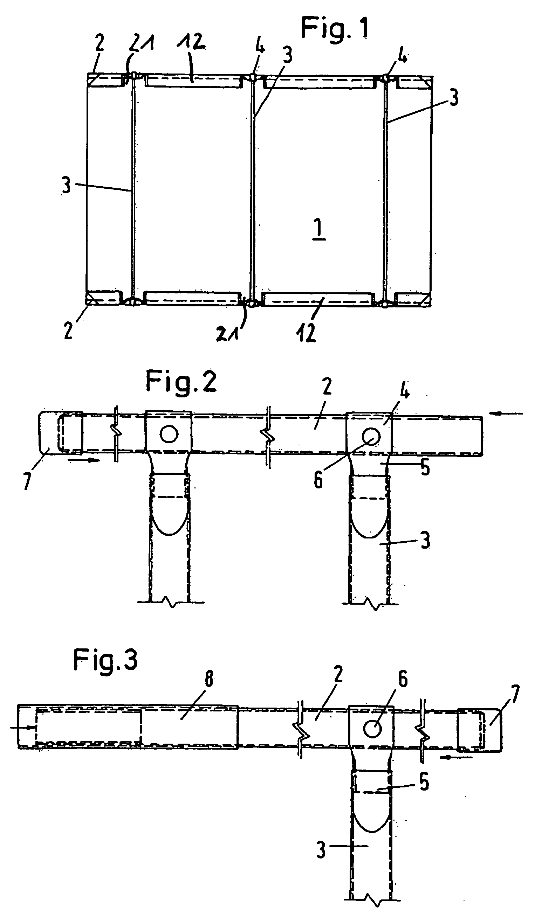

Der in Fig. 1 dargestellte Lichtmanipulator wird durch ein Rahmengestell, welches im Wesentlichen aus zwei Längsstreben 2 und drei als Spannstreben ausgeführten Querstreben 3 gebildet ist, sowie ein über dieses Rahmengestell gespanntes Manipulatortuch 1 gebildet.

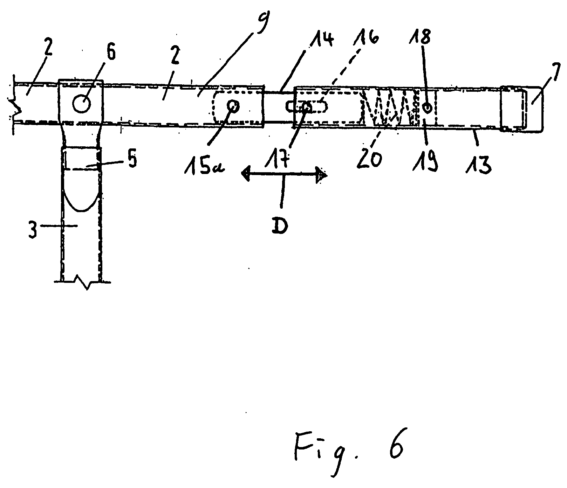

Das Manipulatortuch 1 kann dabei insbesondere ein Reflektortuch oder ein Diffusortuch sein. Das Manipulatortuch 1 besteht aus einem federelastischen Material, in dem z.B. elastische Fäden in das Tuch mit eingearbeitet sind. Dabei wird im aufgespannten Zustand die Federspannung wirksam, um das Rahmengestell jedenfalls mit zusammenzuhalten und so zu verhindern, dass sich die Verbindungen zwischen Längsstreben 2 und Querstreben 3 lösen. An den Längskanten sind an dem Manipulatortuch 1 Schlaufen 12 ausgebildet, durch die die Längsstreben 2 geführt sind. Diese Schlaufen 12 können entweder aus dem Material des Manipulatortuches selbst gebildet sein oder aber aus einem gesonderten Material und mit dem eigentlichen Manipulatortuch fest verbunden, z.B. vernäht, sein. An den Ecken sind die Schlaufen 12 zu Taschen 22 verschlossen. In diesen Taschen werden die Enden der Längsstreben 2 aufgenommen. Solche Taschen sind vorteilhaft insbesondere, wenn auch die Längsstreben 2 federgespannte Verschiebeabschnitte 9, 13 aufweisen (vergleiche Fig. 6)

In Fig. 2 zu erkennen ist, dass an den Längsstreben 2 Klammern 4 mit Aufsteckzapfen 5 durch Nieten 6 befestigt sind. Die Aufsteckzapfen 5 passen stramm in die Rohre, die die Querstrebe 3 bilden. Zum Schutz der Längsstreben 2 und der Schlaufen 12 beziehungsweise Taschen 22 des Manipulatortuchs 1 sind auf die Enden der Längsstreben 2 Kappen 7 aufgesteckt. Statt der Kappen 7 können auch Stopfen in die Rohrenden eingesetzt sein. Die Längsstreben 2 sind in diesem Ausführungsbeispiel geteilt, um in Transportstellung entsprechend kürzere Teile zu erhalten. In der Teilung sind sie durch Aufsteckmuffen 8 verbunden (siehe Fig. 3).

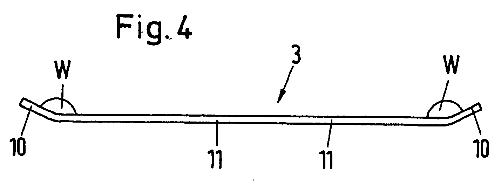

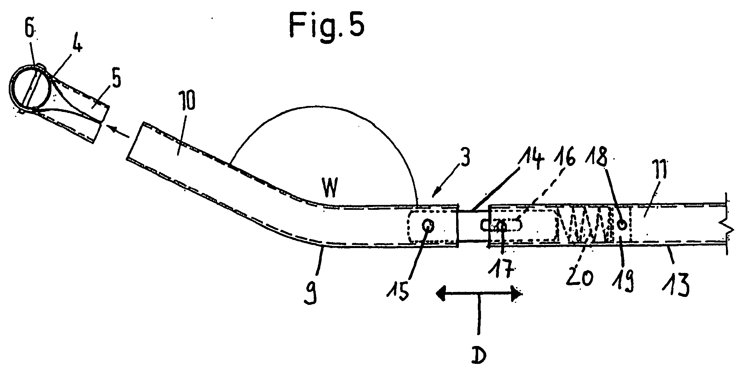

Ein Querstrebe 3, von dem bei der Ausführungsform, wie sie in Fig. 1 dargestellt ist, drei Verwendung finden, ist in Seitenansicht in Fig. 4 dargestellt. Die durch ein Verbindungsstück 11 mit geradem Verlauf verbundenen Enden 10 des Querstrebes 3 sind abgebogen, wie beim Betrachten der Fig. 4 deutlich wird, und zwar in Richtung der durch das Manipulatortuch 1 definierten Ebene. Diese Ebene steht in Fig. 4 senkrecht zur Zeichenebene und liegt oberhalb des dort dargestellten Querstrebes 3. Der Winkel W, in dem die Enden 10 abgebogen sind, ist größer als 90° und liegt bei dieser Ausführungsform bei ca. 155°. Durch das Aufstecken der Querstrebe 3 auf die mit Hilfe der Klammern 4 und Nieten 6 an den Längsstreben 2 befestigten Aufsteckzapfen 5 entsteht ein stabiles räumliches Gebilde, das durch Federspannungen zusammengehalten wird. Diese Federspannung wird einerseits erzeugt durch die Elastizität des Manipulatortuches 1 bzw. der Taschen 12, andererseits durch die in Fig. 5 näher dargestellte und nachfolgend beschriebene Gestaltung zur Erzeugung einer Vorspannung in den als Spannstreben ausgeführten Querstreben 3. Die Querstrebe 3 sind nämlich, in diesem Ausführungsbeispiel nahe dem Übergang zwischen dem Verbindungsstück 11 und dem Ende 10 unterteilt in einen ersten Verschiebeabschnitt 9, der das Ende 10 umfasst, und einen zweiten Verschiebeabschnitt 13 im Bereich des Verbindungsstückes 11. Beide rohrförmigen Abschnitte sind verbunden durch ein in diese Abschnitte eingeschobenes Innenrohr 14. Das Innenrohr 14 ist an dem ersten Verschiebeabschnitt 9 unverschiebbar festgelegt durch eine Niete 15. Gegenüber dem zweiten Verschiebeabschnitt 13 hingegen kann das Innenrohr 14 in Längsrichtung des Verbindungsstückes 11 verschoben werden, somit auch der erste Verschiebeabschnitt 9 gegenüber diesem zweiten Verschiebeabschnitt 13. Angedeutet ist diese Verschiebbarkeit durch einen Doppelpfeil D. Hierzu ist in dem Innenrohr 14 ein Langloch 16 vorgesehen, welches von einem Stift 17 (z.B. einer Niete) der fest mit dem zweiten Verschiebeabschnitt 13 des Querstrebes 3 verbunden ist, durchragt wird. Durch das Zusammenwirken zwischen dem Langloch 16 und dem Stift 17 ergibt sich eine Längsverschiebbarkeit des Innenrohres 14 gegenüber dem zweiten Verschiebeabschnitt 13, wogegen das Innenrohr 14 gegenüber dem zweiten Verschiebeabschnitt 13 verdrehsicher angeordnet ist. Dies ist wichtig, damit der Querstrebe 3 mit seinen winkelig abgeknickten Enden 10 die für den Aufbau des Rahmengestells erforderliche Ausrichtung beibehält.

Anstelle der Niete 15 kann auch ein Splint, insbesondere ein gesicherter Splint, ein Federsplint oder ein Klappsplint verwendet werden. Dies ermöglicht es, die Strebe, hier die Querstrebe 3, auf einfache Weise teilbar zu machen, also den ersten Verschiebeabschnitt 9 vom zweiten Verschiebeabschnitt 13, beziehungsweise dem Innenrohr 14 zu trennen.

In dem zweiten Verschiebeabschnitt 13 ist ferner über eine Niete 18 ein Anschlag 19 ortsfest festgelegt. Zwischen diesem Anschlag 19 und dem in den zweiten Verschiebeabschnitt 13 hineinragenden Ende des Innenrohrs 14 ist eine Schraubenfeder 20 als Druckfederelement angeordnet. Diese Schraubenfeder drückt auf das Ende des Innenrohres 14 und zwingt das Innenrohr aus dem zweiten Verschiebeabschnitt 13 heraus, führt somit zu einer Vorspannung der als Spannstrebe ausgeführten Querstrebe 3 in eine längere Erstreckung, in der der erste Verschiebeabschnitt 9 und der zweite Verschiebeabschnitt 13 voneinander weg gezwungen werden. Ein Anschlag für diese Bewegung ist durch das der Schraubenfeder 20 zugewandte Ende des Langloches 16 gegeben, wenn dieses gegen den Stift 17 stößt.

Zum Zusammensetzen des Lichtmanipulators werden zunächst die Längsstreben 2 in die Schlaufen 12 eingefädelt und die Enden der Längsstreben gegebenenfalls in die Taschen 22 gesteckt, wobei die Klammern 4 mit dem Aufsteckzapfen 5 in Ausschnitten 21 zu liegen kommen. Nun werden die Querstreben 3 eingesetzt. Diese werden hierzu zunächst mit einem ersten Ende auf einen Aufsteckzapfen 5 an einer der Längsstreben 2 aufgesetzt, dann wird gegen die Federkraft der Schraubenfeder 20 der als Spannstrebe ausgeführten Querstreben 3 gestaucht, indem der erste Verschiebeabschnitt 9 in Richtung des zweiten Abschnitts 13 bewegt wird. So verkürzt kann, ggf. unter leichtem Straffen des Manipulatortuches 1 das Ende 10 über den Aufsteckzapfen 5 geführt werden. Nach dem Einnehmen der endgültigen Stellung bleibt dabei eine Federspannung auf dem Rahmengestell erhalten, die einerseits durch das elastische Manipulatortuch 1 bewirkt wird, andererseits durch die Federkräfte der Druckfedern 20 in den Querstreben 3.

Dieses Zusammenwirken der beiden Federkräfte bewirkt eine besonders stabile und störunanfällige, gestraffte Spannung in dem Manipulatortuch 1 im gebrauchsfertigen Zustand. Darüber hinaus können die Querstreben 3 aufgrund der Relativverschiebbarkeit des ersten Verschiebeabschnittes 9 zu dem zweiten Verschiebeabschnitt 13 und der dabei allein zu überwindenden Federkraft der Schraubenfeder 20 mit geringerem Kraftaufwand in das Rahmengestell eingesetzt werden, als dies im Stand der Technik bei starren Querstreben der Fall war, zu deren Einsetzen das Manipulatortuch 1 insgesamt entgegen der elastischen Federspannung gedehnt werden musste.

Durch den Winkel W, der größer als 90° ist, entsteht im Zusammenwirken mit der Federspannung des Manipulatortuches 1 sowie der Schraubenfedern 20 ein stabiles und torsionsfestes Gebilde, das sehr leicht ist und sich leicht zusammensetzen und auseinandernehmen lässt. Bei einer Ausführungsform mit 2,5 qm Fläche des Manipulatortuches beträgt das Gesamtgewicht ca. 2 kg. Im zusammengelegten Zustand passt der gesamte Aufbau, also der Lichtmanipulator in seinen Einzelteilen, in ein Transportrohr von ca. 10 cm Durchmesser und 110 cm Länge. Es sind keine Befestigungsteile wie etwa lose Schrauben oder dgl. vorhanden, die verlorengehen können. Die gesamte Montage erfolgt durch Zusammenstecken. Gehalten werden die Steckverbindungen durch einesteils die Eigenspannung des Manipulatortuches 1 bzw. des Materials der Schlaufen 12 beziehungsweise Taschen 22, anderenteils durch die Spannkraft der Schraubenfedern 20, weshalb die Steckverbindungen sicher gehalten werden und das Manipulatortuch 1 zuverlässig gespannt bleibt.

Fig. 6 zeigt eine Alternative des Lichtmanipulators aus den Fig. 1 bis 5, indem die Längsstreben 2 statt der Querstreben 3 mit federgespannten Verschiebeabschnitten 9, 13 ausgebildet sind. Die Querstreben 3 sind ohne Verschiebeabschnitte ausgeführt. Allerdings können solche federgespannten Verschiebeabschnitte 9, 13 auch gleichzeitig in den Längsstreben 2 und den Querstreben 3 vorgesehen sein.

Die Schlaufen 12 des Manipulatortuchs 1 sind an den Ecken des Manipulatortuchs 1 zu Taschen 22 verschlossen. Die übrigen Schlaufen sind bei dieser Ausführung mit Verschiebeabschnitten 9, 13 nur in den Längsstreben nicht unbedingt erforderlich. Alle vier mit ihren Enden in den Taschen 22 des Manipulatortuchs 1 befindlichen Längsstreben 2 sind mit Verschiebeabschnitten ausgebildet. Ein endständiger Abschnitt einer solchen Längsstrebe 2 ist in Fig. 6 gezeigt. Das Zusammenwirken der Federkräfte der federgespannten Verschiebeabschnitte 9, 13 in den Längsstreben 2 und des elastischen Manipulatortuchs 1 bewirkt eine besonders stabile und störunanfällige, gestraffte Spannung in dem Manipulatortuch 1 im gebrauchsfertigen Zustand.

Die Längsstreben 2 sind in diesem Ausführungsbeispiel nahe ihrer Enden, zwischen den Klammern 4 und den Kappen 7 unterteilt in einen ersten Verschiebeabschnitt 9 und einen zweiten Verschiebeabschnitt 13. So weisen beide Längsstreben aus Fig. 1 jeweils zwei erste Verschiebeabschnitte 9 und zwei zweite Verschiebeabschnitte 13 auf.

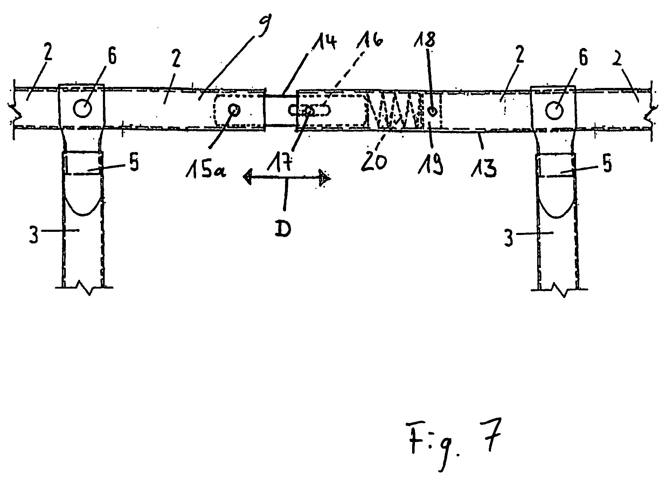

Beide erste und zweite Verschiebeabschnitte 9, 13 sind jeweils durch ein in diese Abschnitte eingeschobenes Innenrohr 14 verbunden. Das Innenrohr 14 ist an dem ersten Verschiebeabschnitt 9 durch einen Splint 15a unverschiebbar festgelegt. Gegenüber dem zweiten Verschiebeabschnitt 13 hingegen kann das Innenrohr 14 in Längsrichtung der Längsstrebe 2 verschoben werden, somit auch der erste Verschiebeabschnitt 9 gegenüber diesem zweiten Verschiebeabschnitt 13. Angedeutet ist diese Verschiebbarkeit durch einen Doppelpfeil D. Hierzu ist in dem Innenrohr 14 ein Langloch 16 vorgesehen, welches von einem Stift 17 (z.B. einer Niete) der fest mit dem zweiten Verschiebeabschnitt 13 der Längsstrebe 2 verbunden ist, durchragt wird. Durch das Zusammenwirken zwischen dem Langloch 16 und dem Stift 17 ergibt sich eine Längsverschiebbarkeit des Innenrohres 14 gegenüber dem zweiten Verschiebeabschnitt 13, wogegen das Innenrohr 14 gegenüber dem zweiten Verschiebeabschnitt 13 verdrehsicher angeordnet ist. Diese Verdrehsicherheit ist bei der hier gewählten Anordnung in der Längsstrebe 2 nicht unbedingt erforderlich. Vorteilhaft ist sie jedoch, wenn die Verschiebeabschnitte 9, 13 zwischen zwei Klammern 4 beziehungsweise Querstreben 3 angeordnet werden, wie dies beispielhaft in Fig. 7 gezeigt ist.

In dem zweiten Verschiebeabschnitt 13 ist ferner über eine Niete 18 ein Anschlag 19 ortsfest festgelegt. Zwischen diesem Anschlag 19 und dem in den zweiten Verschiebeabschnitt 13 hineinragenden Ende des Innenrohrs 14 ist eine Schraubenfeder 20 als Druckfederelement angeordnet. Diese Schraubenfeder 20 drückt auf das Ende des Innenrohres 14 und zwingt das Innenrohr 14 aus dem zweiten Verschiebeabschnitt 13 heraus, führt somit zu einer Vorspannung der als Spannstrebe ausgeführten Längsstrebe 2 in eine längere Erstreckung, in der der erste Verschiebeabschnitt 9 und der zweite Verschiebeabschnitt 13 voneinander weg gezwungen werden. Ein Anschlag für diese Bewegung ist durch das der Schraubenfeder 20 zugewandte Ende des Langloches 16 gegeben, wenn dieses gegen den Stift 17 stößt.

Dabei sind die Verschiebeabschnitte 9, 13 beziehungsweise der erste Verschiebeabschnitt 9 und das Innenrohr 14, das wiederum über den Stift 17, der auch eine Niete sein kann, mit dem zweiten Verschiebeabschnitt 13 verbunden ist, über den Splint 15a, insbesondere einen gesicherten Splint, einen Federstecker oder einen Klappsplint, miteinander verbunden. Somit lässt sich die Querstrebe durch Entfernen des Splints 15a in zwei Stücke trennen und leichter transportieren.

Selbstverständlich lässt sich der Lichtmanipulator auch mit Hilfe eines entsprechenden Adapters an einem Stativ befestigen.

Alternativ oder zusätzlich können Verschiebeabschnitte auch zwischen zwei Klemmen 4 beziehungsweise zwischen zwei Querstreben angeordnet werden. Auch ist es denkbar nur jeweils einen ersten und einen zweiten Verschiebeabschnitt pro Längsstrebe 2 vorzusehen.

### Bezugszeichenliste

- 1: Manipulatortuch
- 2: Längsstrebe
- 3: Querstrebe
- 4: Klammer
- 5: Aufsteckzapfen
- 6: Niete
- 7: Kappe
- 8: Aufsteckmuffe
- 9: erster Verschiebeabschnitt
- 10: Ende
- 11: Verbindungsstück
- 12: Schlaufen
- 13: zweiter Verschiebeabschnitt
- 14: Innenrohr
- 15: Niete
- 15a: Klappsplint
- 16: Langloch
- 17: Stift
- 18: Niete
- 19: Anschlag
- 20: Schraubenfeder
- 21: Ausschnitt
- 22: Tasche
- D: Doppelpfeil

## Patentansprüche

1. Transportabler Lichtmanipulator, bestehend aus einem Rahmengestell und einem auf das Rahmengestell gespannten oder spannbaren Manipulatortuch (1), wobei das Rahmengestell mindestens eine Spannstrebe (3) aufweist, die mindestens zwei in Längsrichtung der Spannstrebe verschiebbare miteinander verbundenen oder verbindbare Verschiebeabschnitten (9, 13) aufweist, die derart federbelastet sind, dass sie durch die Federkraft in Längsrichtung der Spannstrebe voneinander weg gezwungen werden und wobei das Manipulatortuch (1) endständige Festlegeeinrichtungen (12) zum, insbesondere endständigen, Festlegen an dem Rahmengestell aufweist und wobei das Manipulatortuch (1) und/oder die Festlegeeinrichtungen (12) eine Elastizität aufweisen, die in Gebrauchsstellung des Lichtmanipulators die Verschiebeabschnitte (9, 13) aufeinander zu zieht.

2. Transportabler Lichtmanipulator nach Anspruch 1, **dadurch gekennzeichnet, dass** die wenigstens eine Spannstrebe wenigstens in dem Bereich, in dem die beiden Verschiebeabschnitte (9, 13) miteinander verbunden sind, rohrförmig gebildet ist, wobei in die aneinander angrenzenden Rohröffnungen der Verschiebeabschnitte (9, 13) ein Innenrohr (14) oder ein massiver Innenzylinder eingesetzt ist, der mit einem ersten der Verschiebeabschnitte (9) unverschiebbar verbunden ist und mit dem zweiten der Verschiebeabschnitte (13) über eine in Längsrichtung der wenigstens einen Spannstrebe wirkende Zwangsführung (16, 17) über einen vorgegebenen Hub verschiebbar verbunden ist, und dass in dem zweiten Verschiebeabschnitt (13) zwischen einem relativ zu diesem Verschiebeabschnitt (13) ortsfesten Anschlag (19) und dem in der Rohröffnung dieses Verschiebeabschnitts (13) liegenden Ende des Innenrohres (14) bzw. Innenzylinders ein Druckfederelement (20) angeordnet ist.

3. Transportabler Lichtmanipulator nach Anspruch 2, **gekennzeichnet durch** eine Schraubenfeder als Druckfederelement (20).

4. Transportabler Lichtmanipulator nach einem der Ansprüche 2 oder 3, **dadurch gekennzeichnet, dass** die Zwangsführung (16, 17) durch ein in Längsrichtung des wenigstens Spannstrebe verlaufendes Langloch (16) in dem Innenrohr (14) bzw. Innenzylinder sowie einen dieses durchragenden, an dem zweiten Verschiebeabschnitt (13) ortsfest angeordneten Stift (17) gebildet ist.

5. Transportabler Lichtmanipulator nach einem der vorhergehenden Ansprüche, **dadurch gekennzeichnet, dass** der Rahmen wenigstens eine Strebe (2, 3) aufweist, die an seinen Enden (10) um einen Winkel (W) abgewinkelt verläuft, insbesondere dass der Winkel (W), um den die Strebe an seinen Enden (10) abgewinkelt verläuft, größer ist als 90°, vorzugsweise im Bereich zwischen 120° bis 170° liegt, insbesondere 155° beträgt.

6. Transportabler Lichtmanipulator, nach einem der vorstehenden Ansprüche, wobei das Rahmengestell ein zerlegbares und/oder zusammenklappbares Rahmengestell ist.

7. Transportabler Lichtmanipulator, nach Anspruch 6, wobei die in Gebrauchsstellung durch Elastizität des Manipulatortuchs hervorgerufene Kraft auf das das Rahmengestell den Zusammenhalt des Rahmengestells fördert.

8. Transportabler Lichtmanipulator nach einem der vorstehenden Ansprüche, **dadurch gekennzeichnet, dass** das Rahmengestell aus zwei Längsstreben (2) und wenigstens einem die Längsstreben (2) verbindenden Querstrebe (3) gebildet ist.

9. Transportabler Lichtmanipulator nach Anspruch 8, wobei die mindestens eine Querstrebe (3) und/oder die Längsstreben (2) als Spannstreben ausgebildet sind.

10. Transportabler Lichtmanipulator nach Anspruch 9, wobei die mindestens eine Querstrebe (3) gemäß Anspruch 5 ausgebildet ist.

11. Transportabler Lichtmanipulator nach einem der vorhergehenden Ansprüche, **gekennzeichnet durch** Verbindungsmittel, insbesondere Aufsteckzapfen (5) oder Einsteckbuchsen, an den Längsstreben (2) zum Verbinden mit, insbesondere rohrförmig offenen, Enden (10) des wenigstens einen Querstrebes (3) zum Aufbau des Rahmengestells.

12. Transportabler Lichtmanipulator nach den Ansprüchen 5 oder 10, **dadurch gekennzeichnet, dass** die Achsrichtung der Aufsteckzapfen (5) oder Einsteckbuchsen und der Enden (10) der Querstrebe (3) in Gebrauchslage gleich und durch den Winkel (W), um den der Querstrebe (3) an seinen Enden (10) abgewinkelt verläuft, festgelegt ist.

13. Transportabler Lichtmanipulator nach einem der vorhergehenden Ansprüche, **dadurch gekennzeichnet, dass** das Manipulatortuch (1) an seinen für eine Verbindung mit den Längsstreben (2) vorgesehenen Längskanten Längstaschen als Festlegeeinrichtungen (12) zum Festlegen an den Längsstreben (2) aufweist.

14. Transportabler Lichtmanipulator nach Anspruch 13, **dadurch gekennzeichnet, dass** die Längstaschen in den Bereichen, in denen an den Längsstreben (2) Querstrebe (3) festgelegt sind, ausgeschnitten sind.

15. Transportabler Lichtmanipulator nach einem der vorhergehenden Ansprüche, **dadurch gekennzeichnet, dass** das Manipulatortuch (1) ein Reflektortuch oder ein Diffusortuch ist.

## Claims

1. A portable light manipulator, comprising a frame and a manipulator cloth (1) which is stretched or can be stretched on the frame, wherein the frame contains at least one tension bar (3), which has at least two moving sections (9, 13), which can be moved in the longitudinal direction of the tension bar and which are connected or can be connected to one another, which moving sections are spring-loaded in such a way that they can be forced apart from one another in the longitudinal direction of the tension bar due to the spring force and wherein the manipulator cloth (1) has terminal fastening devices (12) for, in particular final, fastening to the frame, and wherein the manipulator cloth (1) and/or the fastening devices (12) have an elasticity which in operating position of the light manipulator pulls the moving sections (9, 13) towards one another.

2. The portable light manipulator according to claim 1, **characterised in that** said at least one tension bar is tubular at least in the area where both moving sections (9, 13) are connected to one another, wherein an inner pipe (14) or massive inner cylinder is inserted into the adjoining pipe openings of the moving sections (9, 13), which is connected fixedly to the first of the moving sections (9) and connected movably to the second of the moving sections (13) via a constraining guide (16, 17) acting in the longitudinal direction of said at least one tension bar, over a preset travel, and that in the second moving section (13) a compression spring element is arranged between a fixed stop (19) with respect to said moving section (13) and the end of the inner pipe (14) or inner cylinder resting in the pipe opening of said moving section (13).

3. The portable light manipulator according to claim 2, **characterised by** a helical spring as a compression spring element (20).

4. The portable light manipulator according to any of the claims 2 or 3, **characterised in that** the constraining guide (16, 17) is formed of a long hole (16) extending in the longitudinal direction of said at least one tension bar in the inner pipe (14) or inner cylinder as well as a pin (17) provided fixedly on the second moving section and protruding through said pipe.

5. The portable light manipulator according to any of the previous claims, **characterised in that** the frame has at least one bar (2, 3) which at its ends (10) extends in a curve at an angle (W), in particular that the angle (W), around which the bar extends in a curve at its ends (10), is greater than 90°, preferably in a range between 120° and 170°, in particular is equal to 155°.

6. The portable light manipulator according to any of the previous claims, wherein the frame can be disassembled and/or collapsed.

7. The portable light manipulator according to claim 6, wherein the force produced in operational position by the elasticity of the manipulator cloth onto the frame secures the cohesion of said frame.

8. The portable light manipulator according to any of the previous claims, **characterised in that** the frame is formed of two longitudinal bars (2) and at least one cross bar (3) connecting the longitudinal bars (2).

9. The portable light manipulator according to claim 8, wherein said at least one cross bar (3) and/or the longitudinal bars (2) are designed as tension bars.

10. The portable light manipulator according to claim 9, wherein said at least one cross bar (3) is designed according to claim 5.

11. The portable light manipulator according to any of the previous claims, **characterised by** connecting means, in particular locating pins (5) or insert bushes, on the longitudinal bars (2) for connection with the ends (10), in particular tubular and open ends, of said at least one cross bar (3) to build the frame.

12. The portable light manipulator according to any of the claims 5 or 10, **characterised in that** the axis direction of the locating pins (5) or insert bushes and of the ends (10) of the cross bar (3) in operational position is the same and defined by the angle (W) around which the cross bar (3) runs at an angle at its ends (10).

13. The portable light manipulator according to any of the previous claims, **characterised in that** the manipulator cloth (1) has longitudinal pockets as fastening devices (12) for clamping to the longitudinal bars (2), at its longitudinal edges provided for securing a connection with the longitudinal bars (2).

14. The portable light manipulator according to claim 13, **characterised in that** the longitudinal pockets are cut in the areas in which cross bars (3) are fixed to the longitudinal bars (2).

15. The portable light manipulator according to any of the previous claims, **characterised in that** the manipulator cloth (1) is a reflector cloth or a diffusor cloth.

## Revendications

1. Manipulateur de lumière transportable, comprenant une armature et un tissu de manipulateur (1) qui est tendu ou peut être tendu sur l'armature, où l'armature contient au moins une barre de tension (3), qui possède au moins deux sections coulissantes (9, 13), lesquelles peuvent coulisser dans le sens longitudinal de la barre de tension et qui sont connectées ou peuvent être connectées l'une à l'autre, lesquelles sections coulissantes sont soumises à une tension de ressort de manière à ce qu'elles puissent être séparées l'une de l'autre dans le sens longitudinal de la barre de tension en raison de la force du ressort et où le tissu de manipulateur (1) possède des dispositifs de fixation terminaux (12) pour, en particulier, assurer la fixation définitive à l'armature, et où le tissu de manipulateur (1) et/ou les dispositifs de fixation (12) présentent un élément élastique qui en position d'utilisation du manipulateur de lumière tire sur les sections coulissantes (9, 13) pour les rapprocher l'une de l'autre.

2. Manipulateur de lumière transportable selon la revendication 1, **caractérisé en ce que** ladite au moins une barre de tension est tubulaire au moins dans la zone où les deux sections coulissantes (9, 13) sont connectées l'une à l'autre, où un tuyau intérieur (14) ou bien un cylindre intérieur massif sont insérés dans les ouvertures de tuyau adjacentes des sections coulissantes (9, 13), lequel tuyau est connecté fixement à la première des sections coulissantes (9) et connecté de façon mobile avec la seconde des sections coulissantes (13) par le biais d'un guide contraignant (16, 17) agissant dans le sens longitudinal de ladite au moins une barre de tension, sur une course prédéfinie, et que, dans la seconde section coulissante (13), un élément ressort de compression est agencé entre la butée fixe (19) par rapport à ladite section coulissante (13) et l'extrémité du tuyau intérieur (14) ou cylindre intérieur reposant dans l'ouverture de tuyau de ladite section coulissante (13).

3. Manipulateur de lumière transportable selon la revendication 2, **caractérisé par** un ressort hélicoïdal comme élément à ressort de compression (20).

4. Manipulateur de lumière transportable selon l'une des revendications 2 ou 3, **caractérisé en ce que** le guide contraignant (16, 17) est formé d'un trou allongé (16) qui s'étend dans la direction longitudinale de ladite au moins une barre de tension dans le tuyau intérieur (14) ou cylindre intérieur ainsi qu'une goupille (17) fixée à demeure sur la seconde section coulissante et en saillie à travers le tuyau.

5. Manipulateur de lumière transportable selon l'une quelconque des revendications précédentes, **caractérisé en ce que** l'armature possède au moins une barre (2, 3) qui à ses extrémités (10) s'étend en une courbe à un angle (W), en particulier que l'angle (W), avec lequel s'étend la barre dans une courbe à ses extrémités (10), est supérieur à 90°, de préférence dans une fourchette comprise entre 120° et 170°, en particulier est égal à 155°.

6. Manipulateur de lumière transportable selon l'une quelconque des revendications précédentes, où l'armature peut être démontée et/ou repliée.

7. Manipulateur de lumière transportable selon la revendication 6, où la force produite en position d'utilisation par l'élasticité du tissu de manipulateur sur l'armature assure la cohésion de ladite armature.

8. Manipulateur de lumière transportable selon l'une quelconque des revendications précédentes, **caractérisé en ce que** l'armature est formée de deux barres longitudinales (2) et au moins d'une barre transversale (3) reliant les barres longitudinales (2).

9. Manipulateur de lumière transportable selon la revendication 8, où ladite au moins une barre transversale (3) et/ou les barres longitudinales (2) sont conçues comme barres de tension.

10. Manipulateur de lumière transportable selon la revendication 9, où ladite au moins une barre transversale (3) est conçue selon la revendication 5.

11. Manipulateur de lumière transportable selon l'une quelconque des revendications précédentes, **caractérisé par** des moyens de connexion, en particulier des goupilles de positionnement (5) ou des douilles d'insertion, sur les barres longitudinales (2) pour connexion avec les extrémités (10), en particulier des extrémités de forme tubulaire et ouvertes, de ladite au moins une barre transversale (3) pour construire l'armature.

12. Manipulateur de lumière transportable selon l'une des revendications 5 ou 10, **caractérisé en ce que** l'axe de direction des goupilles de positionnement (5) ou des douilles d'insertion et des extrémités (10) de la barre transversale (3) en position d'utilisation est le même et défini par l'angle (W) avec lequel la barre transversale (3) tourne à un angle à ses extrémités (10).

13. Manipulateur de lumière transportable selon l'une quelconque des revendications précédentes, **caractérisé en ce que** le tissu de manipulateur (1) possède des poches longitudinales comme dispositifs de fixation (12) pour permettre le serrage avec les barres longitudinales (2), à ses bords longitudinaux prévus pour assurer une connexion avec les barres longitudinales (2).

14. Manipulateur de lumière transportable selon la revendication 13, **caractérisé en ce que** les poches longitudinales sont découpées dans les zones dans lesquelles les barres transversales (3) sont fixées aux barres longitudinales (2).

15. Manipulateur de lumière transportable selon l'une quelconque des revendications précédentes, **caractérisé en ce que** le tissu de manipulateur (1) est un tissu réflecteur ou un tissu diffuseur.
